# EUROPEAN PATENT SPECIFICATION

(11) **EP 4 533 318 B1**
(45) Date of publication and mention of the grant of the patent: **29.10.2025**
(21) Application number: 23724843.0
(22) Date of filing: 10.05.2023
(51) Int. Cl.: G06F 21/62

(54) **SCALABLE, CONTEXT-BASED ANONYMISATION OF SENSOR DATA**
SKALIERBARE, KONTEXTBASIERTE ANONYMISIERUNG VON SENSORDATEN
ANONYMISATION DE DONNÉES DE CAPTEUR ÉVOLUTIVE BASÉE SUR LE CONTEXTE

(30) Priority: 30.05.2022 EP 22176095
(43) Date of publication of application: 09.04.2025
(73) Proprietor: British Telecommunications Public Limited Company, London E1 8EE (GB)
(72) Inventor: SMITH-CREASEY, Max, London E1 8EE (GB); ROSCOE, Jonathan, London E1 8EE (GB)
(74) Representative: British Telecommunications public limited company Intellectual Property Department
(86) International application number: PCT/EP2023/062476
(87) International publication number: WO 2023/232419

(56) References cited:
- US-A1- 2014 280 137
- US-A1- 2015 248 566
- SUPRIYO CHAKRABORTY ET AL: "ipShield: A Framework For Enforcing Context-Aware Privacy", 2 April 2014 (2014-04-02), pages 150 - 163, XP061024537, Retrieved from the Internet <URL:https://www.usenix.org/sites/default/files/nsdi14_full_proceedings_interior.pdf> [retrieved on 20140402]

## Description

Embodiments described herein relate generally to sensor data anonymisation on user devices for enhanced privacy.

Privacy is a significant concern to many users today and is one of the key pillars of trust in many different computer systems, and without adequate levels of user privacy, trust and use in technology would be eroded. In addition, user device data generally has poor granularity with regard to privacy. For example, some platforms allow a user to deny or allow apps access to location data at either a precise or approximate level of detail. Using approximate locations, or denying access altogether can make software or apps on a user device unusable. It is also the case that some software or apps on user devices will ingest as much user data as possible, even when they do not require it to benefit the services provided to the user.

Article "ipShield:A Framework for Enforcing Context-Aware Privacy", Chakraborty et al., discloses a framework, ipShield, that provides users with greater control over their resources at runtime.

US Patent US2015/248566 discloses technologies for sensor privacy on a computing device.

US Patent Application Publication No. 2014/280137 discloses a computer-readable storage media, apparatus and method associated with storing a copy of local data in a historical data store.

The present application relates to the field of privacy for sensor data of user devices.

In accordance with a first aspect of the invention, there is provided a computer-implemented method as claimed in Claim 1. The present invention therefore provides a method of enhancing a user's privacy by obfuscating the sensor data collected by the user's devices and providing that obfuscated sensor data to third party software and apps on the suer's devices in place of the real sensor data. The method allows for the obfuscated data to be automatically generated in an intelligent manner, such that third parties are less able (or entirely unable) to ascertain that the sensor data has been obfuscated. The method also provides for one or both of a phased-in period and a phased-return period, to ensure that the transition from real sensor data to obfuscated sensor data (and vice versa) is as smooth and seamless as possible, thereby enhancing the believability and plausibility of the obfuscated sensor data.

Any of the following may be applied to the above first aspect of the invention.

The method may further comprise generating a user profile, the user profile comprising historical user behaviour; wherein assessing the user's current behaviour from the sensor data comprises comparing the user's current behaviour with the historical user behaviour stored in the user profile.

The generated obfuscated sensor data may comprise data based upon the historical data stored in the user profile.

The user's current behaviour from the sensor data may be assessed throughout the obfuscation period; and when it is determined from the assessing of the user's current behaviour from the sensor data that the obfuscation period is no longer required, ending the obfuscation period.

The generated obfuscated sensor data may comprise random data.

The generated obfuscated sensor data may comprise sensor data collected from one or more sensors of another user device, separate from the one or more user devices.

The obfuscated sensor data may be generated based upon obfuscated sensor data generated for a different user's device.

The method may further comprise providing the obfuscated sensor data to one or more programs running on the one or more user devices during the obfuscation period, instead of the collected sensor data.

The length of the phased-in period and/or the phased-return period may be selected based on the user's current behaviour.

The method may further comprise: setting a scale of obfuscation; and generating the obfuscated sensor data for the one or more sensors during the obfuscation period according to the scale of obfuscation.

The scale of obfuscation may be dynamically changed during the obfuscation period in response to changes in the user's current behaviour; and the generated obfuscated sensor data may be generated according to the changed scale of obfuscation.

The one or more sensors may comprise any one or more of a microphone, a camera, an accelerometer, a magnetometer, a photosensor, an image sensor, a heartrate sensor, or a fingerprint scanner.

The method may be implemented at the operating system level of the of the one or more user devices.

The step of assessing the user's current behaviour may be performed continuously so as to provide an ongoing dynamic assessment of the context of the user's behaviour, such as using the collected sensor data and the user's profile.

In accordance with a second aspect of the invention, there is provided a system as claimed in Claim 15.

In accordance with a third aspect of the invention, there is provided a non-transitory computer readable storage medium as claimed in Claim 16.

In the following, embodiments will be described with reference to the drawings in which:
Fig. 1 shows some of the user devices and sensors that may be utilised by the system to enhance user privacy, in accordance with some embodiments.
Fig. 2 shows examples of how a user's sensor data might be obfuscated according to some embodiments.
Fig. 3 shows a flowchart of the method for enhancing user privacy according to some embodiments.

The methods and systems of the present application relate to the obfuscation of user data in order to enhance user privacy.

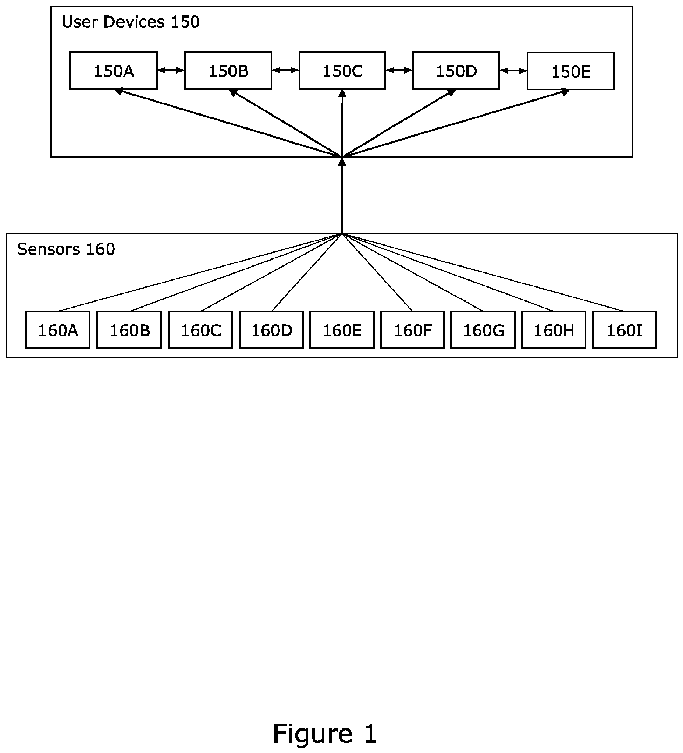

Figure 1 shows a variety of different electronic user devices 150 that may collect data about that user on a day-to-day basis. Such data may be collected by a variety of different sensors on each user device, and may be collected for use by various different software programs, such as applications installed on the user device.

For instance, an application (or app) on a user's mobile device 150A (such as a mobile phone) may request access to a number of different sensors 160A to 160I on that device, such as (but not limited to) a microphone 160A, camera 160B, accelerometer 160C, magnetometer 160D, photosensor 160E (e.g. visible, infrared, etc.), image sensor 160F, heartrate sensor 160G, or fingerprint scanner 160H. An app may also request data from the mobile device 150A relating to the user's usage 160I of other apps (such as how much, how frequently, or how long at a time, a user may use an app or apps).

Similarly, a user's various electronic user devices 150 may interact with each other, providing data collected by a sensor on one device to another device. For example, a program on a user's home computer 150B that collects and analyses data on a user's exercise regime may request sensor data 200 from the user's mobile phone 150A when they are running (e.g. location sensor data, accelerometer sensor data, etc.).

In some cases, a user may not wish such sensor data to be continually provided to the various different software programs and apps installed on their electronic devices. As such, they may choose to actively deny certain apps access to data from particular sensors via a user device's privacy settings.

However, this approach is burdensome for the user, requiring the user to actively select which apps have access to which sensor data. In addition, some software or apps may require access to specific sensor data in order to function normally, such that a user must forgo any privacy concerns if they wish to use that software or app. Furthermore, where a user may wish for an app to only have access to data from a certain sensor for a short period of time, they must then remember to manually revoke that access after that period of time has passed.

The present application provides for a system 100 in which sensor data 200 collected by a user device or devices 150 may be obfuscated at the level of the device's operating system (OS). Such obfuscation means that the sensor data that is provided to the software or apps on the user's devices may not reflect the "true" sensor data 200 collected by the sensors on the user's devices 150, and may instead reflect a simulation of that sensor data 200, thereby providing the user with a greater level of privacy when using that software or those apps, or when going about their day-to-day business.

As a result, the software or apps that receive the obfuscated sensor data 250 may then function normally without compromising the user's privacy by storing sensor data that the user may consider sensitive. This obfuscation and anonymisation of the user's sensor data then prevents third parties from being able to ascertain or gather information relating to the user's true current circumstances or behaviour, thereby protecting the user's privacy.

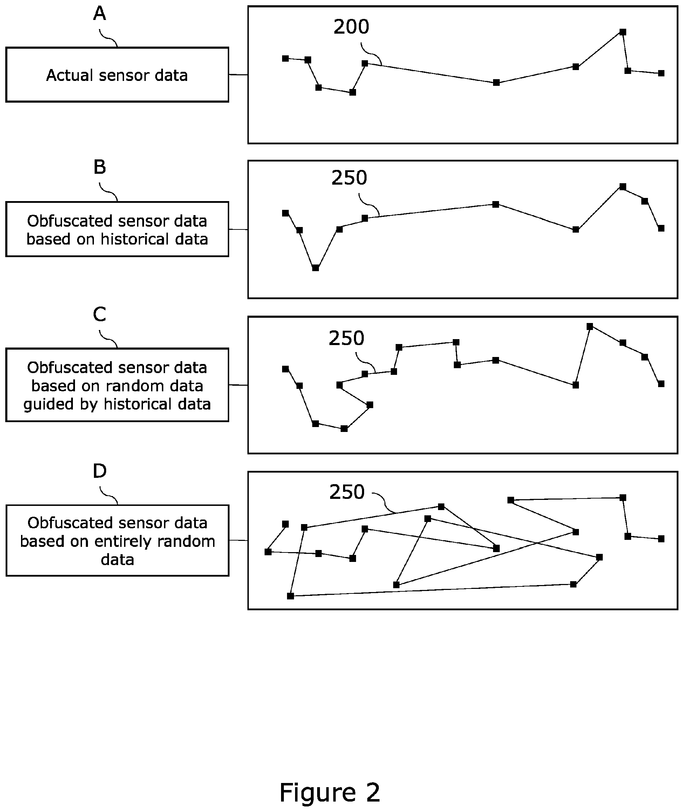

Figure 2 shows examples of how a user's sensor data 200 might be obfuscated. Here, Figure 2 shows a plot in scenario A of the real sensor data 200 received from a location sensor (e.g. GPS, cell tower data, etc.) on a user's device, showing the user's movements between two locations.

In some embodiments, user sensor data 200 may be simulated using historical data stored in a user profile 300 (as shown in scenario B of Figure 2). As a result, the simulated (or obfuscated) sensor data 250 obfuscates the user's real behaviour or circumstances by creating the impression that the user is repeating behaviour that corresponds to historical behaviour.

Alternatively, sensor data 200 might be obfuscated by simulating sensor data that is only guided by historical data stored in the user's profile 300 (as shown in scenario C of Figure 2). In this case, the simulated (or obfuscated) sensor data 250 may include a combination of historical sensor data as well as randomised sensor data, creating the impression that the user is largely repeating behaviour that corresponds to historical behaviour, but with additional new behaviour that falls within certain plausible constraints.

In some embodiments, sensor data 200 may be obfuscated by simulating entirely random sensor data (as shown in scenario D of Figure 2), such that no information can be ascertained or gathered relating to the user's true behaviour, either current or historical. Whilst this does not allow any software or apps on the user's device 150 from determining any information about the user's behaviour, it is easier for those software or apps to determine that the sensor data has been obfuscated, since it is easier to ascertain that the obfuscated sensor data 250 consists of random information.

In some embodiments, the sensor data 200 may be obfuscated in such a manner that it may be difficult to ascertain (either by the software or apps that receive the obfuscated sensor data 250, or by a human or machine observer) that that sensor data has been obfuscated. That is to say, the obfuscated sensor data 250 may be simulated in such a manner that the obfuscated sensor data 250 plausibly reflects real user behaviour, and therefore cannot be distinguished from non-obfuscated (i.e. real) sensor data.

By obfuscating sensor data from a user's device 150 in a manner that plausibly suggests that the resulting obfuscated sensor data 250 is "real" sensor data, the user therefore benefits from the added advantage of the software or apps that receive that obfuscated sensor data 250 not being able to detect that the sensor data has been obfuscated. This provides an additional layer of protection to the user's privacy, since third parties are not even aware that the sensor data received by the software or apps on the user's devices is not "real" user data.

The system 100 and method of the present application may begin obfuscating user sensor data 200 when the user manually sets a setting on their user device 150 to do so. For instance, when a user is intending to visit a location that they consider to be sensitive, they may wish for sensor data 200 provided to the software and apps on their device (or devices) 150 to be obfuscated (or anonymised). In such a scenario, the user might manually change a setting on their device (for instance, their mobile phone 150A or tablet 150C), such that while they are travelling to, while they are at, and while they are travelling from that sensitive location, GPS data is obfuscated to simulate the user being at a different location that is not considered sensitive.

Alternatively, the system 100 may automatically determine that user sensor data should be obfuscated, by employing dynamic context recognition. Here, the system 100 may continuously collect and monitor sensor data 200 at the level of the operating system of the user's device 150, prior to that sensor data being provided to any software or apps on that device 150 (i.e. the user's mobile phone 150A). When the system 100 determines from the collected sensor data 200 that the user's current behaviour exceeds a particular threshold, indicating that the context of the sensor data 200 has changed and the user's privacy requires additional protection, the system may begin obfuscating the sensor data automatically. Determining that such a threshold has been exceeded includes comparing the sensor data 200 to historical sensor data stored in a profile 300 for that user.

As a result, the user's sensor data 200 may be continuously and dynamically assessed to determine the context of the user's current behaviour, and user's sensor data 200 may be obfuscated as and when the user's behaviour changes in a manner that requires greater protection of their privacy.

For example, a user may travel to a location that they have not visited before, or to a location that is geofenced (i.e. a real world area with a virtual perimeter). The system 100, which is continuously collecting sensor data 200, may compare that sensor data 200 to historical data stored in the user's profile 300 using contextual recognition, and conclude that the user's behaviour is anomalous with that historical data when the user's sensor data 200 is deemed to have deviated a sufficient degree from that historical data.

The system 100 may then begin obfuscating sensor data by generating obfuscated sensor data 250 that does not suggest the user is travelling to that new or geofenced location. For instance, the system 100 may simulate sensor data that suggests the user is instead travelling to a location near to the new or geofenced location, rather than the new or geofenced location the user is actually travelling to.

It will be understood that the system 100 may obfuscate sensor data that is provided to a specific software program or app that is running on the user's device 150, or may obfuscate all sensor data that is provided to the software and apps running on the user's device. Likewise, the system 100 may obfuscate sensor data collected by a single user device (e.g. the user's mobile phone 150B or tablet 150C), or may obfuscate sensor data collected by multiple of user devices.

In some embodiments, obfuscated sensor data 250 may be synchronised across multiple user devices 150. For instance, where a user may be carrying both a mobile phone 150A and wearing a smartwatch 150D, the system 100 may generate obfuscated accelerometer sensor data for the user's mobile phone 150A, and synchronise that obfuscated accelerometer data with the user's smartwatch 150D so that both devices appear to be collecting the same accelerometer data. This then enhances the plausibility and believability of the obfuscated sensor data 250.

In some embodiments, the system 100 may generate obfuscated sensor data 250 for one sensor on a user's device 150 to reflect and complement obfuscated sensor data 250 for another sensor of the user's device 150. For example, where the system 100 obfuscates user sensor data to provide the appearance of the user being on a car journey, the obfuscated sensor data 250 for the microphone 160A of the user's mobile phone 150A may be generated to complement the obfuscated sensor data 250 of the accelerometer 160C of the mobile phone 150A (e.g. by generating microphone sensor data that sounds like a car engine). This then further enhances the plausibility and believability of the obfuscated sensor data 250.

In some embodiments, the system 100 may generate obfuscated sensor data 250 for one user device 150 that complements the obfuscated sensor data 250 generated for a different user device 150. For example, the obfuscated sensor data 250 for an accelerometer 160C on the user's smartwatch 150D may be generated to reflect the obfuscated GPS sensor data 250 for the user's mobile phone (i.e. while the user is running). This then further enhances the plausibility and believability of the obfuscated sensor data 250.

The user's sensor data may be obfuscated for a set period of time (e.g. as a default in the system 100, or as set manually by the user). Alternatively, the system 100 may use the ongoing process of dynamic context recognition discussed above to determine when the period of unusual user behaviour or unusual circumstances has ended, and therefore the obfuscation of sensor data can also be ended.

In some embodiments, the system 100 continues to collect and store sensor data 200 from the sensors of the user's device throughout the period of obfuscation. The collected sensor data 200 may be stored in a memory of the user's device.

At a time subsequent to the obfuscation period, the user may actively choose to release the stored sensor data 200 from the obfuscation period to the software and apps on the user's device 150. This allows the user, if they wish, to provide the "true" sensor data 200 to those third party apps at a later time after the period of obfuscation.

In some embodiments, the system 100 may implement a "phased in" period for the obfuscation of sensor data. Here, the obfuscated sensor data 250 may initially match the user's real sensor data 200, before diverging to obfuscate the user's actual sensor data 200. For example, if the user is travelling to a location that requires obfuscation, the system 100 may begin obfuscating sensor data a period of time before the user reaches that destination. So, if the user is driving on a road on the way to the location that requires obfuscation, the system 100 may begin obfuscating GPS data while the user is on that road, such that the obfuscated sensor data 250 diverges from the real sensor data 200 before the user actually arrives at the location requiring obfuscation.

As a result of this "phased-in" approach, the obfuscated sensor data initially corresponds to the real sensor data, and is therefore more plausibly "real" user sensor data. This means that software and apps on the user's devices 150 that receive the obfuscated sensor data 250 (as well as third parties with access to that data) are further unable to ascertain that the obfuscated sensor data 250 is not the user's real sensor data 250.

Here, the system 100 may employ a degree of predictive analysis (for instance by using machine learning algorithms trained to the user's historical data) to predict when the user's behaviour or circumstances may exceed a threshold beyond which enhanced privacy is required. For example, if the user is travelling towards (but has not yet reached) a sensitive location that previously required sensor data obfuscation. As a further example, if the user is travelling on a road that leads towards a known sensitive site and the system considers it reasonably plausible that the user may visit that sensitive site (and therefore may require enhanced sensor data privacy).

As a result, the system 100 is then able to predict that obfuscation of sensor data may shortly be needed, and is able to begin a phased-in period of sensor data obfuscation before the user fully engages in unusual behaviour or arrives at an unusual location.

Similarly, in some embodiments, when the period in which the obfuscation of sensor data is required is ending, the system 100 may implement a "phased-return" to providing real sensor data 200 to the software and apps on the user's device or devices 150. Here, the obfuscated sensor data 250 may be progressively altered until it matches the user's real sensor data 200. For example, if the user leaves a location that required obfuscation, the system 100 may begin altering the obfuscated sensor data 250 until it matches the real sensor data 200 a period of time after the user has left that location. So, if the user is driving on a road away from the location that required obfuscation, the system 100 may begin altering the obfuscation of the user's GPS data such that the obfuscated sensor data 250 eventually matches the real sensor data 200 once the user has travelled sufficiently far from the location that required obfuscation. After this point, the obfuscation of the sensor data may end and the real sensor data 200 may again be provided to the software or apps on the user's device (or devices) 150.

As a result of this "phased-return" approach, the obfuscated sensor data 250 progressively returns to match the real sensor data 200, therefore providing a more continuous and plausible stream of sensor data to the software and programs on the user's device 150. This means that software and apps on the user's devices 150 that receive the obfuscated sensor data (as well as third parties with access to that data) are further unable to ascertain that the obfuscated sensor data 250 is not the user's real sensor data 200.

Here, the system 100 may again employ a degree of predictive analysis (for instance by using machine learning algorithms trained to the user's historical data) to predict when the user's behaviour or circumstances may be expected to return below threshold for enhanced privacy. For example, if the user has previously visited a sensitive location that required sensor data obfuscation, and is known based on historical data to spend a consistent period of time at that location, the system may begin a phased-return period towards the end of that period of time.

The system 100 may select an appropriate length for the phased-in period (or, similarly, the phased-return period), in order to ensure that the transition from (and to) providing real sensor data 200 is smooth and plausible.

The skilled reader will recognise that the system 100 may implement one or both of a phased-in period and a phased-return period, and the present application is not limited to implementing either or both such periods.

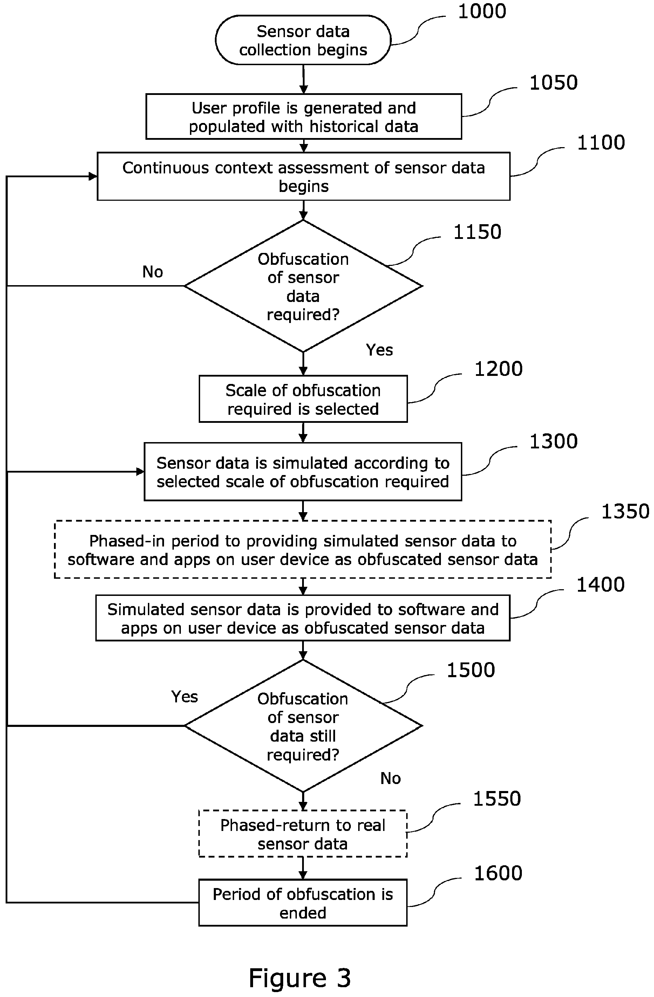

Figure 3 shows a flowchart of the method carried by the system of present invention.

At step 1000, the system 100 begins continuously collecting sensor data 200 from the user's various devices 150 (e.g. their mobile phone 150A, computer 150B, tablet 150C, smartwatch 150D, or smart home system 150E).

At step 1050, the system 100 may generate and populate a user profile 300 for the user using the sensor data 200 that is collected. The user profile 300 includes a record of the user's typical day-to-day behaviour that is derivable from the sensor data 200. For instance, the user profile 300 may include a historical record of the locations the user commonly visits (e.g. where the user visits a certain coffee shop at approximately a given time on certain days of the week).

The system 100 may populate the user profile 300 over an initial training period and using probability density functions (such as kernel density estimation, or KDEs, gaussian mixture models, or GMMs, etc.) along with the collected sensor data 200. The generation and population of the user profile 300 may include employing a suitable machine learning algorithm to determine the user's typical day-to-day behaviour derived from the sensor data 200.

In some embodiments, the user profile 300 may be populated outside of the system 100. For instance, a user may manually populate data into a user profile 300 prior to running the system 100 on their devices 150 for the first time, or a user profile 300 may be populated by a separate system. In these scenarios, the user profile 300 for that user is loaded into the system 100 prior to step 1000.

At step 1100, the system begins carrying out a continuous context assessment of the sensor data 200 to establish whether obfuscation of the user's sensor data 200 is required.

At step 1150, the system 100 compares the incoming sensor data 200 to the user profile 300 to assess how close the incoming sensor data 200 is to the historical sensor data stored in the user profile 300. If the incoming sensor data 200 does not match the historical sensor data sufficiently closely, then the user's current behaviour or situation is deemed an unknown or unusual context that requires privacy measures being implemented to prevent other apps recording some private activity.

The context assessment may include assigning a score for the incoming sensor data 200 that represents how closely the incoming sensor data 200 matches the historical sensor data stored in the user profile 300. The system 100 may then compare the score for the incoming sensor data 200 to a threshold, above or below which the system 100 considers the user's current behaviour or situation to be an unusual context that requires sensor data 200 to be obfuscated.

Here, the threshold may be predefined in the system 100, either by the user themselves or in an initial monitored training phase. In addition, or alternatively, the threshold may be adjusted dynamically by the system 100 based upon feedback from the user (e.g. asking the user if was it appropriate to obfuscate user sensor data 200 on certain previous occasions).

If the system 100 concludes that the sensor data 200 should be obfuscated from some or all of the software or apps on the user's devices 150, the method proceeds to step 1200. If the system 100 alternatively concludes that the sensor data 200 does not currently require obfuscation from some or all of the software or apps on the user's devices 150, then the method returns to step 1100 and continues to assess the context of new sensor data 200 as it is collected.

In this manner, the system 100 is able to dynamically assess the sensor data 200 as it is collected, determining a context for that sensor data 200 so that unusual user behaviour or an unusual situation can be identified. Based on that assessment, the system 100 is then able to determine whether the sensor data 200 should be obfuscated to protect the user's privacy in view of that unusual behaviour or situation.

At step 1200, the system 100 selects the scale of obfuscation needed. This concerns the degree of obfuscation that is applied to the sensor data 200 in order to ensure the user's privacy.

This selection may involve the system 100 referring to a setting manually made by the user (for instance a user selected switch on the device 150) that scales the randomness of the obfuscated data as more privacy is desired.

Alternatively, the system 100 may automatically select an appropriate scale at which to obfuscate the sensor data. The automatic selection of the scale, or granularity, of the obfuscation may be based on a number of factors.

In some embodiments, the system 100 may select the scale of obfuscation based upon the size of the deviation of the incoming sensor data 200 from the historical data held in the user's profile 300.

That is to say, if the deviation from the user's normal routine (as recorded in the user's profile 300) is relatively small, then the level of obfuscation may also be small. Similarly, if the deviation from the user's normal routine (as recorded in the user's profile 300) is relatively large, then the level of obfuscation may also be large.

For example, if a user visits chooses to visit coffee shop B, two doors down from coffee shop A, then the obfuscated sensor data 250 may reflect a relatively close location geographically (e.g. the obfuscated sensor data 250 may reflect the user visiting coffee shop A). This contributes to the believability and plausibility of the obfuscated sensor data 250, as the user might have been seen in the vicinity of coffee shop A when visiting coffee shop B.

This assessment based on the size of the deviation may be achieved by comparing the magnitude of the incoming sensor data 200 with that of the historical data in the user's profile 300. Where the incoming sensor data 300 is assigned a score, this may be based upon the size of the score compared with the relevant threshold used to establish whether the obfuscation of sensor data 200 is required.

In some embodiments, the system 100 may select the scale of obfuscation based upon who the user is with. That is to say, if multiple users are in close proximity to one another when sensor data 200 from both users devices 150 are to be obfuscated, they may wish to have a combined obfuscation profile. In this scenario, the scale of the obfuscation may be determined based on a communication between the users' devices to ensure that two sets of obfuscated sensor data 250 (i.e. one for each user) are within a suitable margin of error.

In some embodiments, the system 100 may select the scale of obfuscation based upon where the user currently is. That is to say, the user's current surroundings may constrain the scale of the obfuscation that is available whilst maintaining the believability and plausibility of the obfuscated data.

For example, in a scenario where a user is visiting a high street shop, it would be sufficient to obfuscate the user's sensor data 200 such that it appears that they are in an adjacent shop (possibly one known to the user's devices 150 based on historical information in the user's profile 300). As a result, high levels of obfuscation are not required, and the degree of obfuscation may be relatively small.

By comparison, in a scenario where the user is visiting a large secure site and obfuscation is required while they are at that secure site, and where there are no nearby business, shops, or other buildings, the obfuscation must significantly distort the user's sensor data 200. As a result, low levels of obfuscation would be difficult or inappropriate, and the degree of obfuscation must be relatively large in order to ensure the obfuscated sensor data 250 is still believable and plausible.

In some embodiments, locations may be ranked by the system 100 to provide an indication of how high (or low) a level of obfuscation is required. This may be done based upon the details of the geographical region in question (such as population density), known attributes of a business at that location (e.g. footfall, opening hours), or by a cluster analysis of that location. The system 100 may acquire this information about certain locations from the internet, for instance by collecting information about local businesses from well-known internet search engines or mapping applications (which store information about businesses in a given location or area).

As a result, a location that the system 100 has assigned a high ranking may result in a greater level of obfuscation of sensor data 200 if the user were to visit that location, compared with a location that the system 100 has assigned a lower ranking.

In some embodiments, the system 100 may select the scale of obfuscation based upon who the sensor data consumer is. In this case, the level of obfuscation may depend upon how the sensor data might be used by software or applications on the user's device 150, as well as how much the user trusts the privacy protection of the software or applications on their device 150.

For example, a navigation application on a user's mobile phone benefits from a high level of detail to provide accurate directions to the user. However, a fitness application on their mobile phone may only require distance, speed, and terrain information to analyse an exercise activity. As a result, the obfuscated sensor data 250 provided to the navigation application may have a small degree of obfuscation (nonetheless still sufficient to protect the user's privacy) in order to maintain believability and plausibility, and the obfuscated sensor data 250 provided to the fitness application may have a higher degree of obfuscation.

The scale of the obfuscation of the sensor data 200 for a given sensor data consumer (i.e. a given software or app) may be set in advance according to a database or lookup table stored in the system 100, or may be set manually by a user.

This may be achieved by implementing a period of training, during which users must select their preferences for each software or app on their device 150. This data may then be used to train a machine learning algorithm, either using a simple lookup table (that determines obfuscation based purely upon the most common preference for that sensor data consumer) or using a more advanced random forest, naïve bayes, or neural-network based approach that maps different software or app features and keywords to the ideal obfuscation level.

For example, in selecting the scale of the obfuscation required, the system 100 may identify at the apps and sensor data currently in use, assess how identifiable or dangerous the sensor data is, consider the historical preferences for other users and the current user, and use a machine learning algorithm to determine the most appropriate scale of obfuscation required using those considerations.

In some embodiments, the scale of the obfuscation may be dynamically changed during the period in which obfuscation is required. For example, as the user's behaviour or circumstances changes, the scale of obfuscation may change as the continuous context assessment of the sensor data 200 determines that the level of deviation from the user's historical behaviour has changed.

It will be understood that the setting of the scale of obfuscation may be based on any of the above discussed aspects, or a combination of the above discussed aspects.

At step 1300, the system 100 simulates sensor data according to the scale of obfuscation selected. That simulated sensor data is then used as the obfuscated sensor data 250 that is provided to the one or more software or apps.

The simulated sensor data may be generated in a number of different ways. Furthermore, the specific method of generating of simulated sensor data may be dependent upon the scale of obfuscation that has been selected.

For example, in the most straightforward case where the scale, or level, of obfuscation is selected to be high, numerical datapoints in the sensor data may be set to be all zero, or all random values. This then provides a complete obfuscation of the user's sensor data 200, but presents a trade-off in the sense that software or apps using the obfuscated sensor data 250 may become non-functional as a consequence of the all zero, or all random, numerical data points. Furthermore, third parties with access to the obfuscated sensor data 250 may be more likely to ascertain that the sensor data has been obfuscated or simulated.

In some embodiments, the user's sensor data 200 may be simulated using secondary sensor 230 data from other devices. For instance, if a user has one or more other devices, they can serve as suitable alternative sources of sensor data 230. This involves simulating the sensor data on one device (e.g. the user's mobile device 150A) with that of another device (e.g. the user's tablet device 150B). As a result, the user may then leave one of their devices (e.g. the user's tablet device 150B) in a separate location to their real location (e.g. at home), so that all location sensor data (as well as possibly other sensor data) on the device that is on the user's person (e.g. the user's mobile device 150A) is obfuscated to correspond to the location sensor data associated the device that is not on the user's person. This means a user may leave a device, such as their tablet device 150B, at home or work and the sensor data from that device would be used as the simulated data for the device on the user's person, such as their mobile device 150A. This ensures that the obfuscated sensor data 250 is consistent with that of the user's other device, and enhances the believability of the obfuscated sensor data 250.

In some embodiments, the system 100 may run an entire virtual device 160 on the user's physical device 150. Here, the virtual device 160 may include one or more pre-set routines that may include a partial or full set of user sensor data 200.

The user sensor data 200 of the one or more pre-set routines may be based upon historical user sensor data associated with the user's profile 300, the user's preferences, or may be set by a user manually, prior to the period of sensor data obfuscation. Alternatively, the one or more pre-set routines may include sensor data that has been generated by a machine learning algorithm based on any of these aforementioned potential sources.

The user's device 150 then uses the sensor data simulated on the virtual device 160 as the obfuscated sensor data 250 that is passed to the software or apps on the user's device 150.

In some embodiments, the simulated sensor data may be generated using the user's real sensor data 200. For example, Markov chains may be employed for predicting the user's movements and/or behaviour, so that the predicted behaviour allows the system 100 to adapt the user sensor data 200 for the obfuscated sensor data 250 in real-time based on that predicted behaviour.

Similar or equivalent techniques may also be used to predict or recognise that a user may be heading into an unknown location, or engaging in otherwise unusual behaviour, so that the system 100 may begin simulating obfuscated sensor data 250 based on the current user sensor data 200.

In some embodiments, sensor data may be simulated in a manner that corroborates a series of events or actions by the user. For example, if location data is simulated to suggest that a user has taken a car journey, distinctive patterns in accelerometer sensor data would be simulated that are consistent with the user being in a moving vehicle. In addition, it would be expected that the audio sensors (i.e. a microphone 160A on the user's device 150) would pick up the sound of car doors and of a car engine. Therefore, the simulated sensor data for one sensor may be matched to simulated sensor data with other sensors based on the same context.

Ensuring the simulated sensor data for all the sensors reflects the same context may be achieved by basing the simulated sensor data on historical data stored in the user's profile 300 (e.g. sensor data 200 from when the user was driving on a previous occasion may be used to simulate appropriate microphone or camera sensor data).

In some embodiments, the system 100 may ensure that the simulated sensor data is within the realm of possibility and legality. That is to say, simulated sensor data may be generated such that the resulting obfuscated sensor data 250 does not suggest the user was behaving in an impossible or illegal manner. For example, obfuscated sensor data 250 suggesting the user was on a journey should not imply that the user was travelling too fast (e.g. at an impossible speed), or breaking local legal speed limits.

Then, at step 1350, the system 100 may optionally (as denoted by the dashed box in Figure 3) begin a "phased-in" period to providing the simulated sensor data as obfuscated sensor data 250 to the software or apps on the user's device 150. This is the same as the "phased-in" approach discussed above.

At step 1400, the system 100 provides the simulated sensor data to the software or apps on the user's device 150 as obfuscated sensor data 250. This may be carried out with respect to sensor data associated with a specific sensor or sensors, or it may be carried out with respect to all of the sensors on the user's device.

Here, the system 100 may implement a period of "phasing-in" sensor data in the manner discussed above. That is to say, the system 100 may begin obfuscating sensor data by initially providing obfuscated sensor data 250 that initially matches the user's real sensor data 200, before diverging at an appropriate point such that the user's actual sensor data is obfuscated to the scale of obfuscation selected (previously selected at step 1200).

As a result, the sensor data that is provided to the software or apps on the user's device 150 is continuous and "smooth", thereby making that sensor data (both real and obfuscated) more believable and plausible throughout the period of enhanced privacy.

At step 1500, the system 100 determines whether the user no longer requires enhanced privacy. If it is determined that the user still requires enhanced privacy, then the system 100 continues to simulate sensor data and provide that sensor data as obfuscated sensor data 250 to the software and apps on the user device 150 (i.e. the system 100 returns to step 1300). If it is determined that the user no longer requires enhanced privacy, the system 100 ends the period of providing obfuscated sensor data 250 to the software or apps on the user's device 150 (i.e. the system 100 returns to step 1100). This determination may be due to the system 100 continuously carrying out a context assessment of the sensor data 200, as in step 1100, or may be due to the user manually ending a period of sensor data obfuscation.

Then, at step 1550, the system 100 may optionally (as denoted by the dashed box in Figure 3) begin a "phased-return" to providing the real sensor data 200 that is collected from the one or more sensors 160 to the software or apps on the user's device 150. This is the same as the "phased-return" approach discussed above.

The user's privacy requirements are expected to change on a frequent basis, and therefore the transitions between obfuscated sensor data 250 and non-obfuscated (i.e. real) sensor data 200 is smooth.

Implementing a phased-return therefore further ensures that the sensor data provided to the software or apps on the user's device 150 is believable and plausible, in that this prevents the sensor data from "jumping" from the obfuscated sensor data 250 to the real sensor data 200 (for instance, an unrealistic jump in the user's perceived location).

For example, for location sensor data, a phased return may be implemented by computing the fastest route and fastest time a user could plausibly reach the actual location from the faked location. This may additionally include path planning along with local traffic laws to ensure that the phased return does not result in perceived impossible or illegal user movements or behaviours.

At step 1600, the system 100 has returned to providing the real sensor data 200, collected from the one or more sensors, to the software or apps on the user's device 150, and the period of enhanced privacy is completed. The system 100 may then return to step 1100 and continue carrying out the continuous context assessment of the sensor data 200 to establish whether further obfuscation of the user's sensor data 200 is required.

The system 100 may also continuously update the historical user data stored in the user profile 300, so that the continuous context assessment of the sensor data 200 remains accurate and is able to reliably assess when a period of enhanced user privacy is required.

Therefore, the system 100 is able to provide enhanced privacy for the user by anonymising the sensor data 200 collected from the sensors on the user's device (or devices) 150.

In particular, the system 100 is able to automatically recognise when there is a need for enhanced privacy, by implementing a continuous context assessment of the collected sensor data 200. This may be based on assessing whether the user's current circumstances or current behaviour should be considered unusual for that user (or unusual generally), and therefore requiring enhanced privacy. This removes any need for the user to manually set the system 100 to begin enhanced privacy measures (although the system 100 may include a functionality for the user to do this).

As such, the system 100 employs a context-based approach, as historical patterns of user sensor data are continuously monitored and used to activate the anonymisation (or obfuscation) process when there is an unexpected deviation.

Similarly, by implementing a continuous context assessment of the collected sensor data 200, the system 100 is able to determine when to end a period of enhanced privacy and return to providing "real" sensor data 200 to the software and apps on the user's device 150.

Furthermore, the system 100 is able to automatically determine an appropriate level (or scale) of obfuscation that should be applied to the real sensor data 200 during the period of enhanced privacy. This, as discussed above, may be based upon a variety of factors (either individually or in combination) such as the user's current circumstances (e.g. location or current time of day), the user's current behaviour, and/or the user's historical behaviour (which may be stored in a user profile 300).

As a result, since an appropriate level of obfuscation is chosen, the obfuscated sensor data 250 provided to the software and apps on the user's device (or devices) 150 more believable and plausible.

Alternatively, where it may be appropriate to set a level (or scale) of obfuscation in which sensor data is obfuscated completely (e.g. where the system 100 generates obfuscated sensor data 250 that is entirely random, or entirely zero), third parties with access to the software and apps on the user's device 150 are entirely unable to learn any information concerning the user's current circumstances or behaviour.

This aspect of the system 100 may therefore be considered "scalable", as it is able to obscure sensor data in a range between real (e.g. based on historical sensor data), artificial (e.g. derived from manipulation of actual sensor data) and fully anonymous (randomised sensor data).

The system 100 is also able to then intelligently generate (or simulate) appropriate sensor data to be used as obfuscated sensor data 250 during the period of enhanced privacy. This may be based upon one or more of an analysis of the user's historical sensor data stored in a user profile 300, models of appropriateness, rankings, cluster analysis, or taking account of geofenced locations. This may also be based upon employing sensor data taken from a different one of the user's devices, thereby ensuring that the obfuscated sensor data 250 is both believable and matches the sensor data collected by those other user devices.

The system 100 may generate (or simulate) appropriate sensor data to be used as obfuscated sensor data 250, and provide that obfuscated sensor data 250 to third party software and apps on the user's device 150, throughout the obfuscation period (or period of enhanced privacy) or periodically during the obfuscation period (or period of enhanced privacy).

The system 100 may generate (or simulate) appropriate sensor data to be used as obfuscated sensor data 250, and provide that obfuscated sensor data 250 to third party software and apps on the user's device 150, for one or more of the sensors 160 on a user's device or devices 150 during the obfuscation period (or period of enhanced privacy).

The particular sensor data that may be obfuscated (or anonymised) includes but is not limited to sensor measurements (e.g. accelerometer, light, temperature, positioning, etc.), app usage (e.g. runtime, focus, interaction) and other common electronic device functions.

The system 100 may also obfuscate user sensor data during the period of enhanced privacy by employing one or both of a "phased-in" and a "phased-return" period at the respective start and the end of the period of enhanced privacy. The length of these periods may be selected to be appropriate in view of the user's current circumstances or behaviour. As a result, the system 100 is able to further ensure that the software and apps on the user's device (or devices) 150 is less able to determine whether any obfuscation has taken place.

It will be understood that the system 100 for obfuscating user sensor data may incorporate any combination of the above discussed functionality, and the present disclosure is not limited to isolated functionality or specific combinations of that functionality.

It will also be understood that while the above discussion includes some examples relating to the obfuscation of the user's location data, the invention is not limited thereto, and any relevant sensor data may be obfuscated by the system 100 of the present application.

The above discussed method for the system 100 may be performed using a computer system or similar computational resource, or system comprising one or more processors and a non-transitory memory storing one or more programs configured to execute the method. Likewise, a non-transitory computer readable storage medium may store one or more programs that comprise instructions that, when executed, carry out the methods described herein.

Whilst certain embodiments have been described, these embodiments have been presented by way of example only, and are not intended to limit the scope of the application. Indeed, the novel devices, and methods described herein may be embodied in a variety of other forms; furthermore, various omissions, substitutions and changes in the form of the devices, methods and products described herein may be made as long as they do not depart from the scope of the invention as it is defined by the appended claims. The word "comprising" can mean "including" or "consisting of" and therefore does not exclude the presence of elements or steps other than those listed in any claim or the specification as a whole. The mere fact that certain measures are recited in mutually different dependent claims does not indicate that a combination of these measures cannot be used to advantage. The invention is defined by the appended claims.

## Claims

1. A computer-implemented method of obfuscating user sensor data (200), the method comprising:
collecting sensor data (200) from one or more sensors of one or more user devices (150);
assessing the user's current behaviour from the sensor data (200), and determining that an obfuscation period is required;
during the obfuscation period, generating obfuscated sensor data (250) for the one or more sensors, different to the collected sensor data (200), and providing the obfuscated sensor data (250) to the one or more programs on the one or more user devices (150);
**characterised by**, during the obfuscation period, providing the obfuscated sensor data (250) to the one or more programs on the one or more user devices (150) includes one or both of:
a phased-in period at the beginning of the obfuscation period during which the obfuscated data (250) initially matches the collected sensor data before deviating from the collected sensor data (200);
a phased-return period at the end of the obfuscation period during which the obfuscated data (250) returns to match the collected sensor data (200).

2. The method according to claim 1, wherein the method further comprises:
generating a user profile (300), the user profile (300) comprising historical user behaviour;
wherein assessing the user's current behaviour from the sensor data (200) comprises comparing the user's current behaviour with the historical user behaviour stored in the user profile.

3. The method according to claim 2, wherein:
the generated obfuscated sensor data (250) comprises data based upon the historical data stored in the user profile (300).

4. The method according to claim 2 or 3, wherein:
the user's current behaviour from the sensor data (200) is assessed throughout the obfuscation period; and
when it is determined from the assessing of the user's current behaviour from the sensor data (200) that the obfuscation period is no longer required, ending the obfuscation period.

5. The method according to any preceding claim, wherein:
the generated obfuscated sensor data (250) comprises random data.

6. The method according to any preceding claim, wherein:
the generated obfuscated sensor data (250) comprises sensor data (200) collected from one or more sensors of another user device, separate from the one or more user devices.

7. The method according to any preceding claim, wherein:
the obfuscated sensor data (250) is generated based upon obfuscated sensor data (250) generated for a different user's device (150).

8. The method according to any preceding claim, the method further comprising:
providing the obfuscated sensor data (250) to one or more programs running on the one or more user devices (150) during the obfuscation period, instead of the collected sensor data (200).

9. The method according to any preceding claim, wherein the length of the phased-in period and/or the phased-return period is selected based on the user's current behaviour.

10. The method according to any preceding claim, wherein the method further comprises:
setting a scale of obfuscation; and
generating the obfuscated sensor data (250) for the one or more sensors during the obfuscation period according to the scale of obfuscation.

11. The method according to claim 10, wherein:
the scale of obfuscation is dynamically changed during the obfuscation period in response to changes in the user's current behaviour; and
the generated obfuscated sensor data is generated according to the changed scale of obfuscation.

12. The method according to any preceding claim, wherein the one or more sensors comprises any one or more of a microphone, a camera, an accelerometer, a magnetometer, a photosensor, an image sensor, a heartrate sensor, or a fingerprint scanner.

13. The method according to any preceding claim, wherein the method is implemented at the operating system level of the of the one or more user devices.

14. The method of any preceding claim wherein the assessing the user's current behaviour step is performed continuously.

15. A system (100) comprising:
one or more user devices (150), each user device (150) comprising:
one or more processors;
a non-transitory memory; and
one or more programs, wherein the one or more programs are stored in the non-transitory memory and configured to be executed by the one or more processors, the one or more programs including instructions for performing any of the methods of claims 1 to 13.

16. A non-transitory computer readable storage medium storing one or more programs, the one or more programs comprising instructions, which, when executed by an electronic device with one or more processors, cause the electronic device to perform any of the methods of claims 1 to 13.

## Patentansprüche

1. Computerimplementiertes Verfahren zum Verschleiern von Benutzersensordaten (200), wobei das Verfahren Folgendes umfasst:
Sammeln von Sensordaten (200) von einem oder mehreren Sensoren einer oder mehrerer Benutzervorrichtungen (150);
Beurteilen des aktuellen Verhaltens des Benutzers aus den Sensordaten (200) und Bestimmen, dass eine Verschleierungsperiode erforderlich ist;
während der Verschleierungsperiode Erzeugen verschleierter Sensordaten (250) für den einen oder die mehreren Sensoren, die sich von den gesammelten Sensordaten (200) unterscheiden, und Bereitstellen der verschleierten Sensordaten (250) für das eine oder die mehreren Programme auf der einen oder den mehreren Benutzervorrichtungen (150);
**dadurch gekennzeichnet, dass** während der Verschleierungsperiode das Bereitstellen der verschleierten Sensordaten (250) für das eine oder die mehreren Programme auf der einen oder den mehreren Benutzervorrichtungen (150) eine oder beide von Folgenden aufweist:
eine Periode schrittweiser Einführung zu Beginn der Verschleierungsperiode, während der die verschleierten Daten (250) anfänglich mit den gesammelten Sensordaten übereinstimmen, bevor sie von den gesammelten Sensordaten (200) abweichen;
eine Periode schrittweiser Rückführung am Ende der Verschleierungsperiode, während der die verschleierten Daten (250) wieder mit den gesammelten Sensordaten (200) übereinstimmen.

2. Verfahren nach Anspruch 1, wobei das Verfahren ferner Folgendes umfasst:
Erzeugen eines Benutzerprofils (300), wobei das Benutzerprofil (300) historisches Benutzerverhalten umfasst;
wobei das Beurteilen des aktuellen Verhaltens des Benutzers aus den Sensordaten (200) Vergleichen des aktuellen Verhaltens des Benutzers mit dem historischen Benutzerverhalten umfasst, das in dem Benutzerprofil gespeichert ist.

3. Verfahren nach Anspruch 2, wobei:
die erzeugten verschleierten Sensordaten (250) Daten umfassen, die auf den historischen Daten basieren, die in dem Benutzerprofil (300) gespeichert sind.

4. Verfahren nach Anspruch 2 oder 3, wobei:
das aktuelle Verhalten des Benutzers aus den Sensordaten (200) während der gesamten Verschleierungsperiode beurteilt wird; und,
wenn aus der Beurteilung des aktuellen Verhaltens des Benutzers aus den Sensordaten (200) bestimmt wird, dass die Verschleierungsperiode nicht mehr erforderlich ist, die Verschleierungsperiode beendet wird.

5. Verfahren nach einem der vorhergehenden Ansprüche, wobei:
die erzeugten verschleierten Sensordaten (250) Zufallsdaten umfassen.

6. Verfahren nach einem der vorhergehenden Ansprüche, wobei:
die erzeugten verschleierten Sensordaten (250) Sensordaten (200) umfassen, die von einem oder mehreren Sensoren einer anderen Benutzervorrichtung getrennt von der einen oder den mehreren Benutzervorrichtungen gesammelt werden.

7. Verfahren nach einem der vorhergehenden Ansprüche, wobei:
die verschleierten Sensordaten (250) basierend auf verschleierten Sensordaten (250) erzeugt werden, die für eine Vorrichtung (150) eines anderen Benutzers erzeugt werden.

8. Verfahren nach einem der vorstehenden Ansprüche, wobei das Verfahren ferner Folgendes umfasst:
Bereitstellen der verschleierten Sensordaten (250) für ein oder mehrere Programme, die während der Verschleierungsperiode auf der einen oder den mehreren Benutzervorrichtungen (150) ausgeführt werden, anstelle der gesammelten Sensordaten (200).

9. Verfahren nach einem der vorhergehenden Ansprüche, wobei die Länge der Periode schrittweiser Einführung und/oder der Periode schrittweiser Rückführung basierend auf dem aktuellen Verhalten des Benutzers ausgewählt wird.

10. Verfahren nach einem vorstehenden Anspruch, wobei das Verfahren ferner Folgendes umfasst:
Festlegen eines Ausmaßes der Verschleierung; und
Erzeugen der verschleierten Sensordaten (250) für den einen oder die mehreren Sensoren während der Verschleierungsperiode gemäß dem Ausmaß der Verschleierung.

11. Verfahren nach Anspruch 10, wobei:
das Ausmaß der Verschleierung während der Verschleierungsperiode in Reaktion auf Änderungen des aktuellen Verhaltens des Benutzers dynamisch geändert wird; und
die erzeugten verschleierten Sensordaten gemäß dem geänderten Ausmaß der Verschleierung erzeugt werden.

12. Verfahren nach einem der vorhergehenden Ansprüche, wobei der eine oder die mehreren Sensoren eines oder mehrere von einem Mikrofon, einer Kamera, einem Beschleunigungsmesser, einem Magnetometer, einem Fotosensor, einem Bildsensor, einem Herzschrittsensor oder einem Fingerabdruckscanner umfassen.

13. Verfahren nach einem der vorhergehenden Ansprüche, wobei das Verfahren auf Betriebssystemebene der einen oder der mehreren Benutzervorrichtungen implementiert wird.

14. Verfahren nach einem der vorhergehenden Ansprüche, wobei der Schritt des Beurteilens des aktuellen Verhaltens des Benutzers kontinuierlich durchgeführt wird.

15. System (100), umfassend:
eine oder mehrere Benutzervorrichtungen (150), wobei jede Benutzervorrichtung (150) Folgendes umfasst:
einen oder mehrere Prozessoren;
einen nichtflüchtigen Speicher; und
ein oder mehrere Programme, wobei das eine oder die mehreren Programme in dem nichtflüchtigen Speicher gespeichert und dazu ausgelegt sind, von dem einen oder den mehreren Prozessoren ausgeführt zu werden, wobei das eine oder die mehreren Programme Anweisungen zum Durchführen eines der Verfahren nach Anspruch 1 bis 13 aufweisen.

16. Nichtflüchtiges computerlesbares Speichermedium, das ein oder mehrere Programme speichert, wobei das eine oder die mehreren Programme Anweisungen umfassen, die, wenn sie von einer elektronischen Vorrichtung mit einem oder mehreren Prozessoren ausgeführt werden, die elektronische Vorrichtung veranlassen, eines der Verfahren nach Anspruch 1 bis 13 durchzuführen.

## Revendications

1. Procédé mis en œuvre par ordinateur de masquage de données de capteur utilisateur (200), le procédé comprenant les étapes suivantes :
collecter des données de capteur (200) à partir d'un ou de plusieurs capteurs d'un ou de plusieurs dispositifs utilisateur (150) ;
évaluer le comportement courant de l'utilisateur à partir des données de capteur (200) et déterminer qu'une période de masquage est requise ;
pendant la période de masquage, générer des données de capteur masquées (250) pour les un ou plusieurs capteurs, différentes des données de capteur collectées (200), et fournir les données de capteur masquées (250) aux un ou plusieurs programmes sur les un ou plusieurs dispositifs utilisateur (150) ;
**caractérisé en ce que**, pendant la période de masquage, la fourniture des données de capteur masquées (250) aux un ou plusieurs programmes sur les un ou plusieurs dispositifs utilisateur (150) comprend l'une des périodes suivantes ou les deux :
une période d'introduction progressive au début de la période de masquage pendant laquelle les données masquées (250) correspondent initialement aux données de capteur collectées avant de s'écarter des données de capteur collectées (200) ;
une période de retour progressif à la fin de la période de masquage pendant laquelle les données masquées (250) reviennent pour correspondre aux données de capteur collectées (200).

2. Procédé selon la revendication 1, le procédé comprenant en outre les étapes suivantes :
générer un profil utilisateur (300), le profil utilisateur (300) comprenant le comportement historique de l'utilisateur ;
l'évaluation du comportement courant de l'utilisateur à partir des données de capteur (200) comprenant de comparer le comportement courant de l'utilisateur au comportement historique de l'utilisateur stocké dans le profil de l'utilisateur.

3. Procédé selon la revendication 2, dans lequel :
les données de capteur masquées générées (250) comprennent des données basées sur les données historiques stockées dans le profil utilisateur (300).

4. Procédé selon la revendication 2 ou la revendication 3, dans lequel :
le comportement courant de l'utilisateur à partir des données de capteur (200) est évalué tout au long de la période de masquage ; et
lorsqu'il est déterminé à partir de l'évaluation du comportement courant de l'utilisateur, à partir des données de capteur (200), que la période de masquage n'est plus requise, la période de masquage est terminée.

5. Procédé selon l'une quelconque des revendications précédentes, dans lequel :
les données de capteur masquées générées (250) comprennent des données aléatoires.

6. Procédé selon l'une quelconque des revendications précédentes, dans lequel :
les données de capteur masquées générées (250) comprennent des données de capteur (200) collectées à partir d'un ou de plusieurs capteurs d'un autre dispositif utilisateur, séparé des un ou plusieurs dispositifs utilisateur.

7. Procédé selon l'une quelconque des revendications précédentes, dans lequel :
les données de capteur masquées (250) sont générées sur la base de données de capteur masquées (250) générées pour un dispositif utilisateur différent (150).

8. Procédé selon l'une quelconque des revendications précédentes, le procédé comprenant en outre l'étape suivante :
fournir les données de capteur masquées (250) à un ou plusieurs programmes exécutés sur les un ou plusieurs dispositifs utilisateur (150) pendant la période de masquage, au lieu des données de capteur collectées (200).

9. Procédé selon l'une quelconque des revendications précédentes, dans lequel la longueur de la période d'introduction progressive et/ou de la période de retour progressif sont sélectionnées sur la base du comportement courant de l'utilisateur.

10. Procédé selon l'une quelconque des revendications précédentes, le procédé comprenant en outre les étapes suivantes :
définir une échelle de masquage ; et
générer les données de capteur masquées (250) pour les un ou plusieurs capteurs pendant la période de masquage en fonction de l'échelle de masquage.

11. Procédé selon la revendication 10, dans lequel :
l'échelle de masquage est changée dynamiquement pendant la période de masquage en réponse aux changements dans le comportement courant de l'utilisateur ; et
les données de capteur masquées générées sont générées en fonction de l'échelle modifiée du masquage.

12. Procédé selon l'une quelconque des revendications précédentes, dans lequel les un ou plusieurs capteurs comprennent l'un quelconque ou plusieurs d'un microphone, d'une caméra, d'un accéléromètre, d'un magnétomètre, d'un photocapteur, d'un capteur d'image, d'un capteur de fréquence cardiaque ou d'un lecteur d'empreintes digitales.

13. Procédé selon l'une quelconque des revendications précédentes, dans lequel le procédé est mis en œuvre au niveau du système d'exploitation des un ou plusieurs dispositifs utilisateur.

14. Procédé selon l'une quelconque des revendications précédentes, dans lequel l'étape d'évaluation du comportement courant de l'utilisateur est effectuée en continu.

15. Système (100) comprenant :
un ou plusieurs dispositifs utilisateur (150), chaque dispositif utilisateur (150) comprenant :
un ou plusieurs processeurs ;
une mémoire non transitoire ; et
un ou plusieurs programmes, les un ou plusieurs programmes étant stockés dans la mémoire non transitoire et configurés pour être exécutés par les un ou plusieurs processeurs, les un ou plusieurs programmes comprenant des instructions pour exécuter l'un quelconque des procédés des revendications 1 à 13.

16. Support de stockage non transitoire lisible par ordinateur stockant un ou plusieurs programmes, les un ou plusieurs programmes comprenant des instructions qui, lorsqu'elles sont exécutées par un dispositif électronique ayant un ou plusieurs processeurs, amènent le dispositif électronique à exécuter l'un quelconque des procédés des revendications 1 à 13.
